# EUROPÄISCHE PATENTSCHRIFT

(11) **EP 4 017 700 B1**
(45) Veröffentlichungstag und Bekanntmachung des Hinweises auf die Patenterteilung: **04.09.2024**
(21) Anmeldenummer: 20744026.4
(22) Anmeldetag: 22.07.2020
(51) Int. Cl.: B29C 55/02, B29C 69/00, B29K 67/00

(54) **VERFAHREN UND VORRICHTUNG ZUM HERSTELLEN MINDESTENS EINES PLA-BANDES**
METHOD AND DEVICE FOR PRODUCING AT LEAST ONE PLA STRIP
PROCÉDÉ ET DISPOSITIF DE FABRICATION D'AU MOINS UNE BANDE DE PLA

(30) Priorität: 20.08.2019 DE 102019122311
(43) Veröffentlichungstag der Anmeldung: 29.06.2022
(73) Patentinhaber: STC Spinnzwirn GmbH, 09116 Chemnitz (DE)
(72) Erfinder: SCHINDLER, Kenneth, 09120 Chemnitz (DE); WOELLNER, Bert, 09353 Oberlungwitz (DE); GÖTZE, Daniel, 09117 Chemnitz (DE); MÜLLER, Torsten, 09112 Chemnitz (DE); WEINHOLD, Jens, 09116 Chemnitz (DE)
(74) Vertreter: Neumann, Ditmar
(86) Internationale Anmeldenummer: PCT/EP2020/070634
(87) Internationale Veröffentlichungsnummer: WO 2021/032395

(56) Entgegenhaltungen:
- WO-A1-2010/074576
- US-B2- 7 128 969

## Beschreibung

Die vorliegende Erfindung betrifft ein Verfahren und eine Vorrichtung zum Herstellen mindestens eines PLA-Bandes.

Polyactide, auch PLA genannt, sind aus dem Stand der Technik bekannt. Aus PLA gefertigter Kunststoff kann in verschiedensten Bereichen verwendet werden. So kann beispielsweise Verpackungsmaterial wie Folien oder Behälter aus PLA gefertigt werden. PLA hat den Vorteil, dass es biologisch abbaubar und aus nachwachsenden Rohstoffen herstellbar ist. Auch ist PLA für die Verpackung von Lebensmitteln geeignet.

Für einige Anwendungen ist es bekannt, PLA-Bänder zu verwenden, also PLA-Kunststoff in Bandform. Beispiele dafür sind Agro- und Geotextilien wie Schutzgewebe und Erntebindegarne, Teppichrücken und Juteersatz. Auch in Kunstrasen können PLA-Bänder verwendet werden. Je nach Anwendung können PLA-Bänder auch als PLA-Bändchen bezeichnet werden. Insbesondere ist aus der WO 2010/074576 A1 ein PLA-Band bekannt.

Bei der Herstellung von PLA-Bändern besteht im Stand der Technik die Problematik, dass PLA nicht oder nur sehr schwer in eine gewünschte Form gebracht werden kann. Das liegt insbesondere daran, dass PLA nach dem Extrudieren amorph ist. Schnittkanten würden daher nicht gut und gleichmäßig ausgebildet werden. In weiteren Herstellungsschritten könnte es dadurch zu Abrissen kommen. Hinreichende Festigkeit und ein stabiler Prozess sind kaum möglich. Daher sind sogenannte Monotapes entwickelt worden. Hierbei handelt es sich um PLA-Bänder, die hergestellt werden, indem bereits beim Extrudieren eines Ausgangsmaterials die Breite des PLA-Bandes festgelegt wird. Hierbei kommt es zu einem sogenannten "Neck-In"-Effekt. Damit wird der Effekt beschrieben, dass sich die Breite eines PLA-Bandes nach der Extrusion beim Abziehen und Abkühlen des PLA reduzieren kann. Um PLA-Bänder einer gewünschten Breite zu erhalten, ist aufgrund des Neck-In-Effekts regelmäßig ein erheblicher Versuchsaufwand zu betreiben. So ist insbesondere für jede Bandbreite eine eigene Extrusionsdüse erforderlich. Es genügt oft nicht, eine bekannte Düse für eine neue Bandbreite lediglich zu skalieren. Die Herstellung von Monotapes ist somit sehr unflexibel. Auch können als Monotapes hergestellte PLA-Bänder in Randbereichen eine schlechtere Qualität aufweisen als in den übrigen Bereichen.

Hiervon ausgehend liegt der vorliegenden Erfindung die Aufgabe zugrunde, die aus dem Stand der Technik bekannten Probleme zumindest teilweise zu überwinden und insbesondere ein Verfahren und eine Vorrichtung bereitzustellen, mit denen PLA-Bänder mit flexibler Breite auf einfache Weise hergestellt werden können.

Diese Aufgabe wird gelöst mit den Merkmalen der unabhängigen Ansprüche. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Be-schreibung näher präzisiert und erläutert, wobei weitere bevorzugte Ausgestaltungen der Erfindung dargestellt werden.

Erfindungsgemäß wird ein Verfahren zum Herstellen mindestens eines PLA-Bandes vorgestellt. Das Verfahren umfasst:
a) Bereitstellen einer bandförmigen extrudierten PLA-Folie,
b) Erwärmen der gemäß Schritt a) bereitgestellten PLA-Folie auf eine Temperatur im Bereich von 40 bis 70°C,
c) Schneiden der gemäß Schritt b) erwärmten PLA-Folie in das mindestens eine PLA-Band, und
d) Verstrecken der gemäß Schritt c) geschnittenen PLA-Folie.

Mit dem beschriebenen Verfahren kann PLA zunächst in Folienform extrudiert und anschließend geschnitten werden. Es hat sich herausgestellt, dass das Schneiden einer PLA-Folie im Gegensatz zu bekannten Verfahren möglich ist, wenn die PLA-Folie vor dem Schneiden auf eine Temperatur im Bereich von 40 bis 70°C, insbesondere auf eine Temperatur oberhalb der Glasumwandlungstemperatur, erwärmt wird. Somit können mit dem beschriebenen Verfahren PLA-Bänder durch Schneiden einer PLA-Folie erhalten werden.

Das beschriebene Verfahren dient der Herstellung mindestens eines PLA-Bandes. Das bedeutet, dass mit dem beschriebenen Verfahren zu einer bestimmten Zeit ein einziges PLA-Band oder zeitgleich mehrere PLA-Bänder herstellt werden können. Unter einem PLA-Band ist ein folienartiges Stück PLA-Kunststoff zu verstehen, dessen Breite sehr viel kleiner als dessen Länge ist. Von einer bandförmigen PLA-Folie unterscheidet sich ein PLA-Band dadurch, dass ein PLA-Band eine geringere Breite hat als die bandförmige PLA-Folie. Insbesondere kann das PLA-Band als ein Endlos-Band hergestellt und aufgewickelt werden. Das Verfahren dient entsprechend vorzugsweise dem Herstellen mindestens eines Endlos-PLA-Bandes. Das Verfahren kann mit einer Vorrichtung durchgeführt werden, durch die die PLA-Folie beziehungsweise das mindestens eine PLA-Band beispielsweise durch Galetten geführt wird.

Dadurch, dass mit dem beschriebenen Verfahren ein Schneiden einer PLA-Folie möglich ist, kann das mindestens eine PLA-Band mit dem beschriebenen Verfahren durch Schneiden der PLA-Folie erhalten werden. Ein einzelnes PLA-Band kann mittels des beschriebenen Verfahrens beispielsweise dadurch erhalten werden, dass das PLA-Band aus der PLA-Folie herausgeschnitten und der übrige Teil der PLA-Folie verworfen wird. Eine Mehrzahl von PLA-Bändern kann insbesondere dadurch erhalten werden, dass die PLA-Folie restlos in die PLA-Bänder zerschnitten wird.

Das beschriebene Verfahren eignet sich insbesondere für Anwendungen in Agro- und Geotextilien wie Schutzgewebe und Erntebindegarne, Teppichrücken und Juteersatz. Auch kann das beschriebene Verfahren für die Herstellung von PLA-Bändern für Kunstrasen, insbesondere für Sportplätze oder für den Landschaftsbau, verwendet werden.

Das beschriebene Verfahren umfasst die Schritte a) bis d), die vorzugsweise in der angegebenen Reihenfolge durchgeführt werden. Die Schritte b) und c) können auch teilweise oder vollständig gleichzeitig durchgeführt werden. Bevorzugt ist, dass Schritt b) vor Schritt c) beginnt. Schritt d) erfolgt vorzugsweise nach Abschluss von Schritt c).

In Schritt a) des beschriebenen Verfahrens wird eine bandförmige extrudierte PLA-Folie bereitgestellt. Die PLA-Folie ist im Vergleich zu den PLA-Bändern gleichermaßen bandförmig ausgebildet, hat aber eine größere Breite als die PLA-Bänder. Das Bereitstellen der PLA-Folie kann insbesondere dadurch erfolgen, dass eine bereits vorhandene, außerhalb des beschriebenen Verfahrens hergestellte, bandförmige extrudierte PLA-Folie zur Verfügung gestellt wird oder dass die bandförmige PLA-Folie als Teil von Schritt a) durch Extrusion hergestellt wird. Unter Extrusion ist in diesem Zusammenhang zu verstehen, dass ein aufgeschmolzener Ausgangsstoff, insbesondere ein Granulat, durch eine Düse in eine gewünschte Form gepresst wird. Die Düse ist vorzugsweise als Düsenlippe oder als Düsenplatte ausgebildet.

In Schritt b) wird die PLA-Folie auf eine Temperatur im Bereich von 40 bis 70°C erwärmt. Durch diese Wärmebehandlung wird das Schneiden der PLA-Folie möglich.

Vorzugsweise wird das PLA auf eine Temperatur nahe der Glasumwandlungstemperatur des PLA erwärmt. Besonders bevorzugt erfolgt die Erwärmung auf eine Temperatur oberhalb der Glasumwandlungstemperatur. Die Glasumwandlungstemperatur von PLA liegt etwa zwischen 45°C und 65°C. Eine Erwärmung auf 40 bis 70°C ist mithin eine Erwärmung auf eine Temperatur im Bereich der Glasumwandlungstemperatur. Es ist bevorzugt, dass die Glasumwandlungstemperatur des konkret verwendeten PLA zunächst durch Versuche bestimmt wird und die Temperatur für die Erwärmung anhand der den Versuchen erhaltenen Ergebnisse gewählt wird.

In Schritt c) wird die PLA-Folie geschnitten. Das erfolgt vorzugsweise während die PLA-Folie eine Temperatur im Bereich von 40 bis 70°C, insbesondere oberhalb der Glasumwandlungstemperatur, hat. Nach dem Schneiden kann die Temperatur wieder fallen.

In Schritt c) wird mindestens ein Schnitt vorgenommen. Bevorzugt ist jedoch, dass eine Mehrzahl von Schnitten vorgenommen wird.

Die PLA-Folie wird in Schritt c) in Längsrichtung geschnitten. Das bedeutet, dass der mindestens eine Schnitt entlang der Richtung erfolgt, in die sich die PLA-Folie bandförmig erstreckt. Wird die PLA-Folie für das beschriebene Verfahren über Galetten durch eine Vorrichtung geführt, erfolgt der mindestens eine Schnitt vorzugsweise entlang der Bewegungsrichtung der PLA-Folie. Ein Schnitt kann somit durch eine ortsfeste Klinge erzeugt werden, mehrere parallele Schnitte können durch mehrere nebeneinander angeordnete ortsfeste Klingen erzeugt werden.

Durch das Schneiden entsteht aus der PLA-Folie das mindestens eine PLA-Band.

Das mindestens einer Band wird anschließend in Schritt d) verstreckt.

Ein Verstrecken kann beispielsweise dadurch erfolgen, dass das PLA-Band bzw. die PLA-Bändchen über Galetten mit unterschiedlicher Rotationsgeschwindigkeit geführt werden. Durch das Verstrecken kann die Reißfestigkeit der PLA-Bänder erhöht werden.

Gemäß einer bevorzugten Ausführungsform des Verfahrens wird eine Breite des mindestens einen PLA-Bandes zwischen verschiedenen Verfahrensabschnitten des Verfahrens verändert.

Mit dem beschriebenen Verfahren ist es möglich, die Breite des mindestens einen PLA-Bandes über den Abstand zwischen den für das Schneiden verwendeten Klingen einzustellen. Eine derartige Einstellung ist mit sehr viel geringerem Aufwand möglich als der Austausch der Extrusionsdüse bei der Herstellung von Monotapes. Insbesondere kann die Breite beliebig variiert werden, ohne dass für jede Breite eine eigene Extrusionsdüse unter erheblichem Aufwand konstruiert werden müsste.

In der vorliegenden Ausführungsform wird dieser Umstand genutzt, um PLA-Bänder verschiedener Breite herzustellen. So können in einem ersten Verfahrensabschnitt PLA-Bänder einer ersten Breite hergestellt werden und in einem zweiten Verfahrensabschnitt PLA-Bänder einer zweiten Breite. Die PLA-Bänder der ersten Breite können getrennt von den PLA-Bändern der zweiten Breite aufgewickelt und als Produkt abtransportiert werden.

Wird mit dem beschriebenen Verfahren mehr als ein PLA-Band zur gleichen Zeit hergestellt, können die zeitgleich hergestellten PLA-Bänder alle die gleiche Breite oder unterschiedliche Breiten haben. In der vorliegenden Ausführungsform können so in einem ersten Verfahrensabschnitt PLA-Bänder mit einem ersten Satz von Breiten hergestellt werden und in einem zweiten Verfahrensabschnitt PLA-Bänder mit einem zweiten Satzes von Breiten.

Gemäß einer weiteren bevorzugten Ausführungsform des Verfahrens werden in Schritt c) Randbereiche der PLA-Folie abgeschnitten.

Die Randbereiche der PLA-Folie sind die äußersten Bereiche der PLA-Folie bei Betrachtung quer zu der Richtung, in der die PLA-Folie bandförmig ausgebildet ist. Insbesondere die Randbereiche können qualitativ schlechter ausgebildet sein als der übrige Teil der PLA-Folie. Das kann beispielsweise an dem oben beschriebenen Neck-In-Effekt liegen. Die Randbereiche können verworfen oder recycelt werden.

Dass die Randbereiche der PLA-Folie gemäß der vorliegenden Ausführungsform abgeschnitten werden, ist ein Vorteil gegenüber der Herstellung von Monotapes. Bei Monotapes sind die qualitativ schlechteren Randbereiche zwangsläufig Teil der hergestellten PLA-Bänder.

Gemäß einer weiteren bevorzugten Ausführungsform des Verfahrens wird die PLA-Folie in Schritt b) mittels mindestens einer beheizten Galette erwärmt.

Vorzugsweise ist insbesondere der Galettenmantel der mindestens einen beheizten Galette beheizt. Durch Kontakt mit dem Galettenmantel kann die PLA-Folie auf einfache Weise schnell auf eine genau einstellbare Temperatur erwärmt werden.

Gemäß einer weiteren bevorzugten Ausführungsform des Verfahrens wird die Zugspannung durch Führen der PLA-Folie über zwei Galetten erzeugt, die mit um einen Faktor im Bereich von 1,01 bis 1,05 voneinander verschiedenen Geschwindigkeiten angetrieben werden.

Die Zugspannung kann dadurch erzeugt werden, dass die PLA-Folie über zwei Galetten geführt wird, die mit unterschiedlichen Geschwindigkeiten angetrieben werden. Die in Förderrichtung der PLA-Folie vordere der beiden Galetten ist dabei schneller als die andere Galette, wodurch die Zugspannung entsteht. Vorzugsweise sind zwischen den beiden Galetten Klingen zum Schneiden der PLA-Folie angeordnet. Die langsamere der beiden Galetten ist in dem Fall stromauf der Klingen angeordnet, die schnellere der beiden Galetten stromab der Klingen.

Es hat sich herausgestellt, dass die erwärmte PLA-Folie besonders gut geschnitten werden kann, wenn die Geschwindigkeiten der beiden Galetten um einen Faktor im Bereich von 1,01 bis 1,05 voneinander verschieden sind. Das bedeutet, dass die schnellere der beiden Galetten um einen Faktor 1,01 bis 1,05 schneller ist als die langsamere der beiden Galetten.

Die während des Schneidens verwendete Zugspannung ist vorzugsweise so gering, dass durch diese noch kein Verstrecken der PLA-Folie im Sinne von Schritt d) erfolgt.

Gemäß einer weiteren bevorzugten Ausführungsform des Verfahrens wird eine erste der Galetten zudem zum Erwärmen der PLA-Folie gemäß Schritt b) genutzt.

Bevorzugt ist die vorliegende Ausführungsform in Kombination mit der Ausführungsform, bei der die PLA-Folie in Schritt b) mittels mindestens einer beheizten Galette erwärmt wird.

In dieser Ausgestaltung dient die mindestens eine beheizte Galette auch dazu, die Zugspannung zu erzeugen. Insoweit kann das beschriebene Verfahren mit einer besonders effizient gestalteten Vorrichtung durchgeführt werden.

Als ein weiterer Aspekt der Erfindung wird eine Vorrichtung zum Herstellen mindestens eines PLA-Bandes vorgestellt. Die Vorrichtung umfasst:
- eine Erwärmungseinrichtung zum Erwärmen einer bandförmigen extrudierten PLA-Folie,
- eine Schneideinrichtung zum Schneiden der mittels der Erwärmungseinrichtung erwärmten PLA-Folie in das mindestens eine PLA-Band,
- eine Steuereinheit, die dazu eingerichtet ist, die Erwärmungseinrichtung derart zu steuern, dass die PLA-Folie durch die Erwärmungseinrichtung auf eine Temperatur im Bereich von 40 bis 70°C erwärmt wird,
- eine der Schneideinrichtung nachgeordnete Verstreckeinrichtung.

Die beschriebenen besonderen Vorteile und Ausgestaltungsmerkmale des Verfahrens sind auf die Vorrichtung anwendbar und übertragbar, und umgekehrt. Insbesondere wird das beschriebene Verfahren vorzugsweise mit der beschriebenen Vorrichtung ausgeführt. Insbesondere ist die beschriebene Vorrichtung vorzugsweise zur Durchführung des beschriebenen Verfahrens eingerichtet.

Die Vorrichtung umfasst vorzugsweise eine Mehrzahl von Galetten. Die Galetten dienen einerseits dem Transport der PLA-Folie beziehungsweise des mindestens einen PLA-Bandes. Vorzugsweise ist mindestens eine der Galetten beheizt ausgebildet, sodass diese Galette andererseits auch dem Erwärmen der PLA-Folie dient. Die Erwärmungseinrichtung ist vorzugsweise durch mindestens eine beheizte Galette gebildet. Weiterhin können einige der Galetten dem Erzeugen einer Zugspannung in der PLA-Folie dienen und/oder ein Verstrecken der PLA-Bänder bewirken.

Die Schneideinrichtung ist stromab der Erwärmungseinrichtung angeordnet. Das bedeutet, dass die PLA-Folie bei regulärem Betrieb der Vorrichtung die Erwärmungseinrichtung vor der Schneideinrichtung durchläuft. Gleichwohl ist es auch bevorzugt, dass das Erwärmen während des Schneidens fortdauert, so dass eine Überschneidung von Schneideinrichtung und Erwärmungseinrichtung möglich ist.

Die Vorrichtung umfasst weiterhin eine Verstreckeinrichtung zum Verstrecken der mittels der Schneideinrichtung geschnittenen PLA-Folie. Die Verstreckeinrichtung ist stromab der Schneideinrichtung angeordnet. Das bedeutet, dass die PLA-Folie bei regulärem Betrieb der Vorrichtung die Schneideinrichtung vor der Verstreckeinrichtung durchläuft.

Gemäß einer bevorzugten Ausführungsform der Vorrichtung weist die Schneideinrichtung eine Mehrzahl von Klingen zum Schneiden der PLA-Folie auf.

Die Klingen können ortsfest angeordnet sein. Die PLA-Folie kann in dem Fall durch die Klingen geschnitten werden, indem die PLA-Folie an den Klingen vorbeigeführt wird.

Gemäß einer weiteren bevorzugten Ausführungsform der Vorrichtung ist die Schneideinrichtung derart ausgebildet, dass eine veränderliche Anzahl der Klingen zum Schneiden der PLA-Folie verwendet werden kann und/oder dass die Klingen in veränderlichem Abstand zueinander zum Schneiden der PLA-Folie verwendet werden können.

Vorzugsweise ist die Schneideinrichtung derart ausgebildet, dass eine veränderliche Anzahl der Klingen zum Schneiden der PLA-Folie verwendet werden kann und dass die Klingen in veränderlichem Abstand zueinander zum Schneiden der PLA-Folie verwendet werden können.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: einen schematischen Ablauf eines erfindungsgemäßen Verfahrens zum Herstellen mindestens eines PLA-Bandes,
- Fig. 2:: eine schematische Seitenansicht einer erfindungsgemäßen Vorrichtung zum Herstellen mindestens eines PLA-Bandes gemäß dem Verfahren nach Fig. 1, und
- Fig. 3:: eine schematische Draufsicht auf einen Teil der Vorrichtung aus Fig. 2.

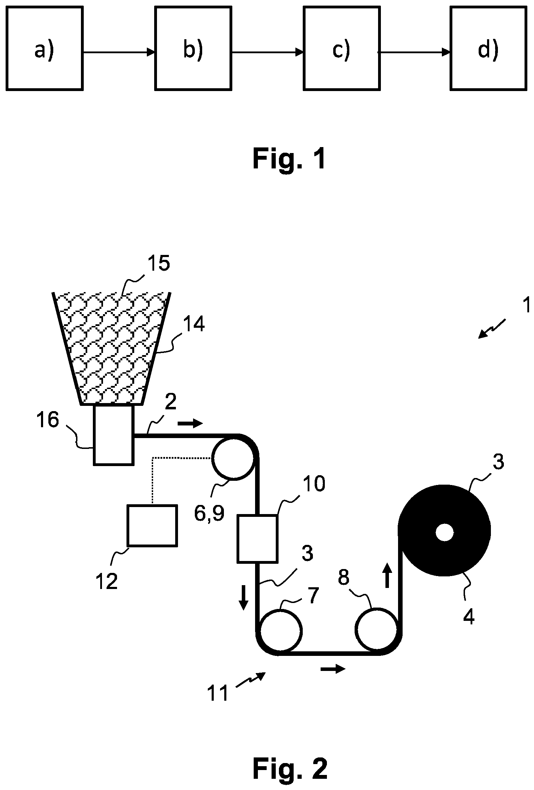

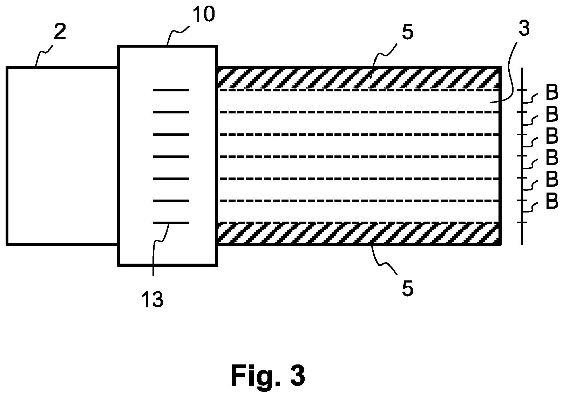

Fig. 1 zeigt einen schematischen Ablauf eines erfindungsgemäßen Verfahrens zum Herstellen mindestens eines PLA-Bandes 3. Die Bezugszeichen beziehen sich auf die Fig. 2 und 3. Das Verfahren umfasst:
a) Bereitstellen einer bandförmigen extrudierten PLA-Folie 2,
b) Erwärmen der gemäß Schritt a) bereitgestellten PLA-Folie 2 mittels mindestens einer beheizten Galette 6 auf eine Temperatur im Bereich von 40 bis 70°C,
c) Schneiden der gemäß Schritt b) erwärmten PLA-Folie 2 in eine Mehrzahl von PLA-Bänder 3. Dabei werden Randbereiche 5 der PLA-Folie 2 abgeschnitten. Eine Breite B der PLA-Bänder 3 wird zwischen verschiedenen Verfahrensabschnitten des Verfahrens verändert. Die PLA-Folie 2 wird während des Schneidens unter einer Zugspannung gehalten. Dazu wird die PLA-Folie 2 über zwei Galetten 6,7 geführt, die mit um einen Faktor im Bereich von 1,01 bis 1,05 voneinander verschiedenen Geschwindigkeiten angetrieben werden. Eine erste der Galetten 6 ist beheizt und wird zudem zum Erwärmen der PLA-Folie 2 gemäß Schritt b) genutzt.
d) Verstrecken der gemäß Schritt c) geschnittenen PLA-Folie 2.

Fig. 2 zeigt eine schematische Seitenansicht einer erfindungsgemäßen Vorrichtung 1 zum Herstellen mindestens eines PLA-Bandes 3. Die Vorrichtung 1 ist zur Durchführung des Verfahrens aus Fig. 1 eingerichtet. Mit der Vorrichtung 1 kann eine Mehrzahl von PLA-Bändern 3 aus einer PLA-Folie 2 hergestellt werden. Gezeigt ist die Vorrichtung 1 zusammen mit den PLA-Bändern 3 und der PLA-Folie 2, die nicht Teil der Vorrichtung 1 sind. Dazu wird zunächst eine bandförmige PLA-Folie 2 durch Extrusion hergestellt. Das Ausgangsmaterial dafür ist ein Granulat 15, das in einem Trichter 14 der Vorrichtung 1 vorgehalten und aus diesem einer Extrusionseinrichtung 16 der Vorrichtung 1 zugeführt werden kann. Die PLA-Folie 2 entsteht aus dem Granulat 15 durch Extrusion in der Extrusionseinrichtung 16. Ausgehend von der Extrusionseinrichtung 2 wird die PLA-Folie 2, wie durch Pfeile angedeutet, über Galetten 6, 7 und 8 geführt und dabei zu den PLA-Bändern 3 verarbeitet, die schließlich als fertiges Produkt auf eine Produktspule 4 aufgewickelt werden.

Zunächst wird die PLA-Folie 2 gemäß Schritt b) des Verfahrens aus Fig. 1 erwärmt. Dazu weist die Vorrichtung 1 eine Erwärmungseinrichtung 9 auf. Die Erwärmungseinrichtung 9 ist in der gezeigten Ausführungsform durch eine erste Galette 6, die beheizt ist, ausgebildet. Dazu umfasst die Vorrichtung 1 eine Steuereinheit 12, die dazu eingerichtet ist, die Erwärmungseinrichtung 9 derart zu steuern, dass die PLA-Folie 2 durch die Erwärmungseinrichtung 9 auf eine Temperatur im Bereich von 40 bis 70°C des PLA erwärmt wird. Anschließend wird die PLA-Folie 2 gemäß Schritt b) geschnitten. Dazu weist die Vorrichtung 1 eine Schneideinrichtung 10 auf. Nach dem Schneiden liegt die PLA-Folie 2 in Form der PLA-Bänder 3 vor. Diese werden mittels einer Verstreckeinrichtung 11 gestreckt. Die Verstreckeinrichtung 11 ist durch eine zweite Galette 7 und eine dritte Galette 8 ausgebildet, welche mit unterschiedlichen Rotationsgeschwindigkeiten rotiert werden. Die Schneideinrichtung 10 ist stromab der Erwärmungseinrichtung 9 angeordnet. Die Verstreckeinrichtung 11 ist stromab der Schneideinrichtung 10 angeordnet.

Fig. 3 zeigt eine schematische Draufsicht auf einen Teil der Vorrichtung 1 aus Fig. 2 zusammen mit der PLA-Folie 2 und den PLA-Bändern 3. Zu erkennen ist insbesondere, dass die PLA-Folie 2 durch die Schneideinrichtung 10 in PLA-Bänder 3 geschnitten wird und dass Randbereiche 5 der PLA-Folie durch die Schneideinrichtung 10 abgeschnitten werden. Weiterhin ist zu erkennen, dass die Schneideinrichtung 10 eine Mehrzahl von Klingen 13 zum Schneiden der PLA-Folie 2 in PLA-Bänder 3 aufweist. Die Schneideinrichtung 10 ist derart ausgebildet, dass eine veränderliche Anzahl der Klingen 13 zum Schneiden der PLA-Folie 2 verwendet werden kann und dass die Klingen 13 in veränderlichem Abstand zueinander zum Schneiden der PLA-Folie 2 verwendet werden können.

### Bezugszeichenliste

- 1: Vorrichtung
- 2: PLA-Folie
- 3: PLA-Band
- 4: Produktspule
- 5: Randbereiche
- 6: erste Galette
- 7: zweite Galette
- 8: dritte Galette
- 9: Erwärmungseinrichtung
- 10: Schneideinrichtung
- 11: Verstreckeinrichtung
- 12: Steuereinheit
- 13: Klinge
- 14: Trichter
- 15: Granulat
- 16: Extrusionseinrichtung

- B: Breite

## Patentansprüche

1. Verfahren zum Herstellen mindestens eines PLA-Bandes (3), umfassend:
a) Bereitstellen einer bandförmigen extrudierten PLA-Folie (2),
b) Erwärmen der gemäß Schritt a) bereitgestellten PLA-Folie (2) auf eine Temperatur im Bereich von 40 bis 70°C,
c) Schneiden der gemäß Schritt b) erwärmten PLA-Folie (2) in das mindestens eine PLA-Band (3), und
d) Verstrecken der gemäß Schritt c) geschnittenen PLA-Folie (2).

2. Verfahren nach Anspruch 1, wobei in Schritt b) auf eine Temperatur oberhalb der Glasumwandlungstemperatur des PLA erwärmt wird.

3. Verfahren nach einem der vorstehenden Ansprüche, wobei eine Breite (B) des mindestens einen PLA-Bandes (3) zwischen verschiedenen Verfahrensabschnitten des Verfahrens verändert wird.

4. Verfahren nach einem der vorstehenden Ansprüche, wobei in Schritt c) Randbereiche (5) der PLA-Folie (2) abgeschnitten werden.

5. Verfahren nach einem der vorstehenden Ansprüche, wobei die PLA-Folie (2) in Schritt b) mittels mindestens einer beheizten Galette (6) erwärmt wird.

6. Verfahren nach einem der vorstehenden Ansprüche, wobei die Zugspannung durch Führen der PLA-Folie (2) über zwei Galetten (6,7) erzeugt wird, die mit um einen Faktor im Bereich von 1,01 bis 1,05 voneinander verschiedenen Geschwindigkeiten angetrieben werden.

7. Verfahren nach Anspruch 6, wobei eine erste der Galetten (6) zudem zum Erwärmen der PLA-Folie gemäß Schritt b) genutzt wird.

8. Vorrichtung (1) zum Herstellen mindestens eines PLA-Bandes (3), umfassend:
- eine Erwärmungseinrichtung (9) zum Erwärmen einer bandförmigen extrudierten PLA-Folie (2),
- eine Schneideinrichtung (10) zum Schneiden der mittels der Erwärmungseinrichtung (9) erwärmten PLA-Folie (2) in das mindestens eine PLA-Band (3),
- eine Steuereinheit (12), die dazu eingerichtet ist, die Erwärmungseinrichtung (9) derart zu steuern, dass die PLA-Folie (2) durch die Erwärmungseinrichtung (9) auf eine Temperatur im Bereich von 40 bis 70°C des PLA erwärmt wird,
- eine der Schneideinrichtung (9) nachgeordnete Verstreckeinrichtung (11).

9. Vorrichtung (1) nach Anspruch 8, wobei die Schneideinrichtung (10) eine Mehrzahl von Klingen (13) zum Schneiden der PLA-Folie (2) aufweist.

10. Vorrichtung (1) nach Anspruch 9, wobei die Schneideinrichtung (10) derart ausgebildet ist, dass eine veränderliche Anzahl der Klingen (13) zum Schneiden der PLA-Folie (2) verwendet werden kann und/oder dass die Klingen (13) in veränderlichem Abstand zueinander zum Schneiden der PLA-Folie (2) verwendet werden können.

## Claims

1. Process for producing at least one PLA tape (3), comprising:
a) providing a tapelike extruded PLA film (2),
b) heating the PLA film (2) provided in step a) to a temperature in the range from 40 to 70°C,
c) slitting the PLA film (2) heated in step b) into the at least one PLA tape (3), and
d) drawing the PLA film (2) slit in step c).

2. Process according to Claim 1, wherein heating in step b) takes place to a temperature above the glass transition temperature of the PLA.

3. Process according to either of the preceding claims, wherein a breadth (B) of the at least one PLA tape (3) is changed between different sections of the process.

4. Process according to any of the preceding claims, wherein edge regions (5) of the PLA film (2) are cut off in step c).

5. Process according to any of the preceding claims, wherein the PLA film (2) is heated by means of at least one heated godet (6) in step b).

6. Process according to any of the preceding claims, wherein the tensile stress is generated by guiding the PLA film (2) over two godets (6, 7) which are driven at speeds different from one another by a factor in the range from 1.01 to 1.05.

7. Process according to Claim 6, wherein a first of the godets (6) is also utilized for heating the PLA film in step b).

8. Apparatus (1) for producing at least one PLA tape (3), comprising:
- a heating device (9) for heating a tapelike extruded PLA film (2),
- a slitting device (10) for slitting the PLA film (2) heated by means of the heating device (9) into the at least one PLA tape (3),
- a control unit (12) which is configured to control the heating device (9) in such a way that the PLA film (2) is heated by the heating device (9) to a PLA temperature in the range from 40 to 70°C,
- a drawing device (11) downstream of the slitting device (9).

9. Apparatus (1) according to Claim 8, wherein the slitting device (10) comprises a plurality of blades (13) for slitting the PLA film (2).

10. Apparatus (1) according to Claim 9, wherein the slitting device (10) is designed in such a way that a variable number of the blades (13) can be used for slitting the PLA film (2) and/or that the blades (13) can be used at a variable distance from one another for slitting the PLA film (2).

## Revendications

1. Procédé de fabrication d'au moins une bande de PLA (3), comprenant :
a) la fourniture d'un film de PLA extrudé en forme de bande (2),
b) le chauffage du film de PLA (2) fourni selon l'étape a) à une température dans la plage allant de 40 à 70 °C,
c) la découpe du film de PLA (2) chauffé selon l'étape b) en l'au moins une bande de PLA (3), et
d) l'étirage du film de PLA (2) découpé selon l'étape c).

2. Procédé selon la revendication 1, dans lequel, à l'étape b), on chauffe à une température supérieure à la température de transition vitreuse du PLA.

3. Procédé selon l'une quelconque des revendications précédentes, dans lequel une largeur (B) de l'au moins une bande de PLA (3) est modifiée entre différentes sections de procédé du procédé.

4. Procédé selon l'une quelconque des revendications précédentes, dans lequel, à l'étape c), des zones de bord (5) du film de PLA (2) sont découpées.

5. Procédé selon l'une quelconque des revendications précédentes, dans lequel le film de PLA (2) est chauffé à l'étape b) au moyen d'au moins une galette chauffée (6).

6. Procédé selon l'une quelconque des revendications précédentes, dans lequel la contrainte de traction est générée en faisant passer le film de PLA (2) sur deux galettes (6, 7) entraînées à des vitesses différentes l'une de l'autre d'un facteur dans la plage allant de 1,01 à 1,05.

7. Procédé selon la revendication 6, dans lequel une première des galettes (6) est en outre utilisée pour chauffer le film de PLA selon l'étape b).

8. Dispositif (1) pour la fabrication d'au moins une bande de PLA (3), comprenant :
- un appareil de chauffage (9) pour chauffer un film de PLA extrudé en forme de bande (2),
- un appareil de découpe (10) pour découper le film de PLA (2) chauffé au moyen de l'appareil de chauffage (9) en l'au moins une bande de PLA (3),
- une unité de commande (12) adaptée pour commander l'appareil de chauffage (9) de telle sorte que le film de PLA (2) est chauffé par l'appareil de chauffage (9) à une température dans la plage allant de 40 à 70 °C du PLA,
- un appareil d'étirage (11) placé en aval de l'appareil de découpe (9).

9. Dispositif (1) selon la revendication 8, dans lequel l'appareil de découpe (10) présente une pluralité de lames (13) pour découper le film de PLA (2).

10. Dispositif (1) selon la revendication 9, dans lequel l'appareil de découpe (10) est configuré de telle sorte qu'un nombre variable de lames (13) peut être utilisé pour découper le film de PLA (2) et/ou que les lames (13) peuvent être utilisées à une distance variable les unes des autres pour découper le film de PLA (2).
